# FASCICULE DE BREVET EUROPEEN

(11) **EP 3 386 783 B1**
(45) Date de publication et mention de la délivrance du brevet: **18.09.2019**
(21) Numéro de dépôt: 16809511.5
(22) Date de dépôt: 21.11.2016
(51) Int. Cl.: B60G 21/05, B60B 35/08

(54) **PROCÉDÉ RÉALISATION D'UN ESSIEU ARRIÈRE DE VÉHICULE AUTOMOBILE PAR FRETTAGE D'UNE TRAVERSE DANS UN BRAS**
VERFAHREN ZUR HERSTELLUNG EINER HINTERACHSE EINES KRAFTFAHRZEUGS DURCH AUFSCHRUMPFEN EINES QUERTRÄGERS IN EINEM ARM
METHOD FOR PRODUCING A REAR AXLE OF A MOTOR VEHICLE BY SHRINK FITTING A CROSSMEMBER IN AN ARM

(30) Priorité: 08.12.2015 FR 1561970
(43) Date de publication de la demande: 17.10.2018
(73) Titulaire: Renault s.a.s., 92100 Boulogne Billancourt (FR)
(72) Inventeur: ROLLET, Remi, 91190 Gif sur Yvette (FR)
(86) Numéro de dépôt international: PCT/FR2016/053027
(87) Numéro de publication internationale: WO 2017/098104

(56) Documents cités:
- EP-A1- 2 441 603
- EP-A2- 1 036 680
- WO-A1-2012/101365
- DE-A1-102015 201 625
- DE-U1-202013 004 035
- JP-A- 2005 262 903
- US-A1- 2010 038 893
- US-A1- 2010 127 470
- US-A1- 2013 093 156
- US-A1- 2014 151 973

## Description

L'invention concerne un procédé de réalisation d'un essieu selon le préambule de la revendication 1 et d'un essieu selon le préambule de la revendication 9. Des exemples de tels procédés et essieux sont connus des documents US 2010/038893 A1 et EP 1 036 680 A2 et aussi du document DE 10 2015 201625 A1 qui est publié postérieurement.

### ARRIERE PLAN TECHNIQUE DE L'INVENTION

L'invention concerne plus particulièrement un procédé de réalisation d'un essieu pour véhicule automobile comportant :
- une traverse tubulaire d'axe transversal qui est souple élastiquement en torsion ;
- deux bras parallèles longitudinaux dont chacun est destiné à être fixé à une caisse du véhicule automobile et dont chacun est fixé rigidement à un tronçon d'extrémité transversale de la traverse.

Il est connu d'équiper les trains arrière de véhicules automobiles avec un essieu de type "semi-rigide". Un tel essieu comporte principalement deux bras longitudinaux entre lesquels s'étend une traverse élastique en torsion et rigide en flexion.

Chaque bras comporte une extrémité avant qui est montée pivotante sur le châssis du véhicule tandis qu'une extrémité arrière porte une roue arrière du véhicule.

La traverse s'étend transversalement entre les deux bras, de manière décalée longitudinalement vers l'arrière par rapport aux extrémités avant des bras. Les propriétés élastiques de la traverse lui permettent notamment de remplir une fonction anti-dévers qui limite le roulis de la carrosserie. Il est par exemple connu de réaliser des traverses tubulaires en acier.

Par ailleurs, il est aussi connu de réaliser les bras longitudinaux en aluminium. De tel bras présentent ainsi des caractéristiques mécaniques satisfaisantes tout en permettant d'alléger le poids du véhicule.

Cependant, il est très complexe de fixer la traverse en acier par soudage sur les bras en aluminium. Pour contourner ce problème, on connaît actuellement deux solutions.

La première solution consiste à souder des semelles, par exemple en acier, en bout de traverse. Les bords libres de chaque extrémité de la traverse sont conformés de manière à être jointifs sur toute leur longueur avec une face de la semelle. Un cordon de soudage est déposé sur toute la longueur du joint entre la traverse et la semelle. Chaque semelle est ensuite fixée contre le bras associé au moyen de vis.

Cette première solution permet d'obtenir une fixation solide et résistante des bras sur la traverse.

Cependant, le gain de masse n'est pas optimal du fait de la présence des semelles et des vis. Le poids de ces éléments ajoutés alourdit sensiblement l'essieu, par exemple de l'ordre de 3 kg. Or l'utilisation de bras en aluminium vise au contraire à alléger l'essieu. Cette première solution n'est donc pas optimale.

On a aussi proposé une deuxième solution qui consiste à coller les extrémités de la traverse aux bras. Cette solution permet avantageusement de conserver un essieu léger car aucune pièce massive n'est utilisée pour la fixation des bras.

Cependant, l'opération de collage demeure très délicate. Dans certains cas, l'adhérence de la colle peut s'avérer insuffisante, provoquant alors un endommagement prématuré de l'essieu.

### BREF RESUME DE L'INVENTION

La présente invention vise à fournir une solution permettant d'obtenir un essieu à la fois léger et résistant. L'invention propose ainsi un procédé selon la revendication 1.

D'autres caractéristiques du procédé sont définies dans les revendications dépendantes 2 à 8.

L'invention propose aussi un essieu selon la revendication 9, obtenu par la mise en oeuvre du procédé selon les enseignements de l'invention.

D'autres caractéristiques de l'essieu sont définies dans les revendications dépendantes 10 à 12.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un essieu arrière de véhicule automobile réalisé selon les enseignements de l'invention ;
- la figure 2 est une vue éclatée en perspective qui représente une tête d'extrémité de la traverse de l'essieu de la figure 1 prête à être frettée dans un logement d'un bras dudit essieu ;
- la figure 3 est une vue en coupe axiale qui représente un tronçon d'extrémité de la traverse de la figure 2 réalisé selon un premier mode de réalisation de l'invention ;
- la figure 4 est une vue en coupe axiale qui représente un tronçon d'extrémité de la traverse de la figure 2 réalisé selon une variante du premier mode de réalisation de l'invention ;
- la figure 5 est une vue en coupe axiale qui représente un tronçon d'extrémité de la traverse de la figure 2 réalisé selon un deuxième mode de réalisation de l'invention ;
- la figure 6 est une vue en coupe axiale qui représente un tronçon d'extrémité de la traverse de la figure 2 réalisé selon une variante du deuxième mode de réalisation de l'invention ;
- la figure 7 est une vue en coupe axiale qui représente un tronçon d'extrémité de la traverse de la figure 2 réalisé selon un troisième mode de réalisation de l'invention ;
- la figure 8 est une vue en coupe axiale qui représente le tronçon d'extrémité de la traverse de la figure 7 fretté dans le logement du bras de l'essieu.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif des orientations longitudinale, verticale et transversale indiquées par le trièdre "L,V,T" des figures. La direction longitudinale "L" est orientée d'arrière en avant selon le sens de déplacement normal du véhicule. La direction verticale "V" est orientée de bas en haut depuis le sol sur lequel repose le véhicule vers le toit du véhicule.

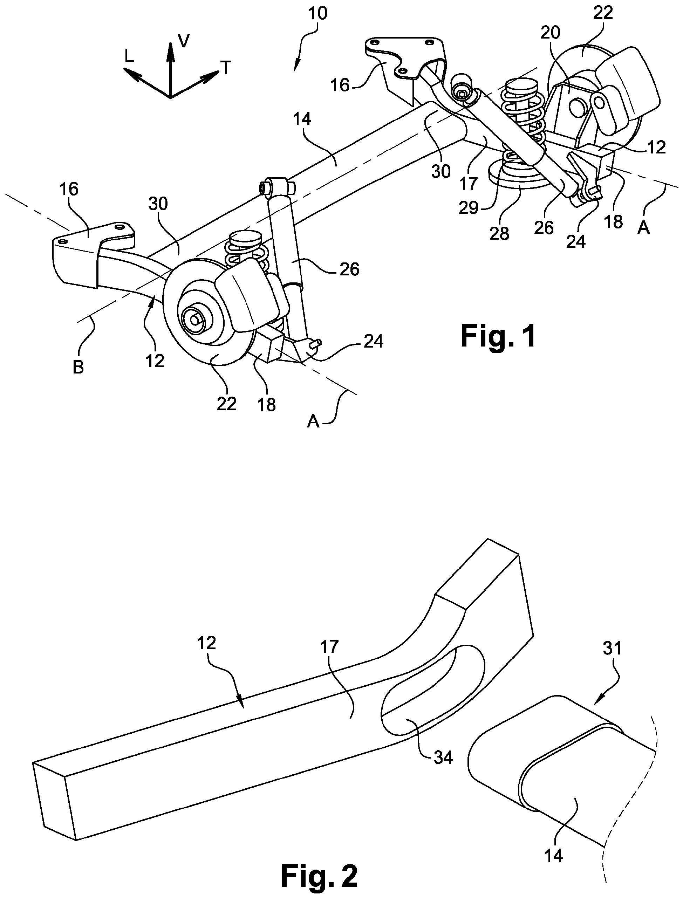

On a représenté à la figure 1 un essieu 10 arrière de véhicule automobile. Il s'agit d'un essieu 10 de type "semi-rigide". Il comporte deux bras 12 parallèles, dits bras 12 longitudinaux, dont chacun présente un axe "A" principal globalement longitudinal. Les deux bras 12 longitudinaux sont reliés entre eux par une traverse 14 d'axe "B" principal transversal.

Chaque bras 12 longitudinal s'étend depuis une première extrémité 16 avant jusqu'à une deuxième extrémité 18 arrière. Chaque bras 12 longitudinal est formé par une pièce massive en aluminium. Il présente une face 17 latérale interne qui est tournée vers l'autre bras 12.

La première extrémité 16 avant est destinée à être montée pivotante autour d'un axe transversal sur un châssis (non représenté) du véhicule.

Un tronçon d'extrémité arrière de chaque bras 12 longitudinal est muni d'une équerre 20 qui est destinée à supporter de manière rotative une roue (non représentée) arrière associée du véhicule ainsi qu'un disque ou tambour 22 de frein associé à la roue.

Dans le mode de réalisation représenté à la figure 1, le bras 12 longitudinal comporte aussi une bride 24 pour supporter un élément 26 d'amortisseur, et une bride 28 pour supporter un organe 29 de suspension du véhicule.

La traverse 14 s'étend depuis un premier tronçon 30 d'extrémité transversale jusqu'à un deuxième tronçon 30 d'extrémité transversale.

La traverse 14 se présente ici sous la forme d'un tube en acier. Au moins les tronçons 30 d'extrémité transversale de la traverse 14 présentent, en section selon un plan vertical longitudinal, un profil fermé. Dans l'exemple représenté à la figure 1, la traverse 14 présente un profil fermé sur toute sa longueur. La traverse 14 comporte ainsi une paroi métallique conformée de manière tubulaire selon un profil fermé.

Les tronçons 30 d'extrémité de la traverse 14 présentent plus particulièrement une section de forme oblingue.

La traverse 14 est réalisée de manière à être rigide en flexion dans le plan vertical et dans le plan longitudinal et de manière à être souple en torsion autour de son axe "B" principal.

Chaque tronçon 30 d'extrémité de la traverse 14 est fixé rigidement au bras 12 longitudinal associé selon le même agencement et selon le même procédé. On décrira par la suite la fixation d'un seul tronçon 30 d'extrémité de la traverse 14 sur le bras 12 longitudinal associé en référence à la figure 2, cette description étant applicable à la fixation de l'autre tronçon 30 d'extrémité sur l'autre bras 12 longitudinal.

Selon un premier mode de réalisation de l'invention, le tronçon 30 d'extrémité forme une tête 31 de fixation qui est délimitée radialement par une face 32 extérieure de forme cylindrique d'axe sensiblement transversal. Le terme "cylindrique" signifie que la face extérieure peut être générée par des directrices fermées de différentes formes. La tête 31 présente ici , en section, une forme oblongue.

Dans ce premier mode de réalisation la tête 31 d'extrémité est agencée dans le prolongement d'un tronçon 33 intermédiaire cylindrique de mêmes dimensions que la tête en section radiale.

Le bras 12 associé présente un logement 34 cylindrique de forme complémentaire à la face 32 cylindrique de la tête 31 d'extrémité qui est formé dans la face 17 interne du bras 12. Le logement 34 cylindrique n'est pas traversant, en d'autres termes il comporte un fond fermé.

La traverse 14 est destinée à être fixée rigidement au bras 12 par mise en oeuvre d'une étape "E3" de fixation rigide par frettage de la tête 31 d'extrémité de la traverse 14 dans le logement 34 de forme complémentaire du bras 12. Le terme frettage signifie que la tête 31 d'extrémité est encastrée transversalement à force dans le logement 34 avec ajustement serré sensiblement sur toute la longueur de la tête 31.

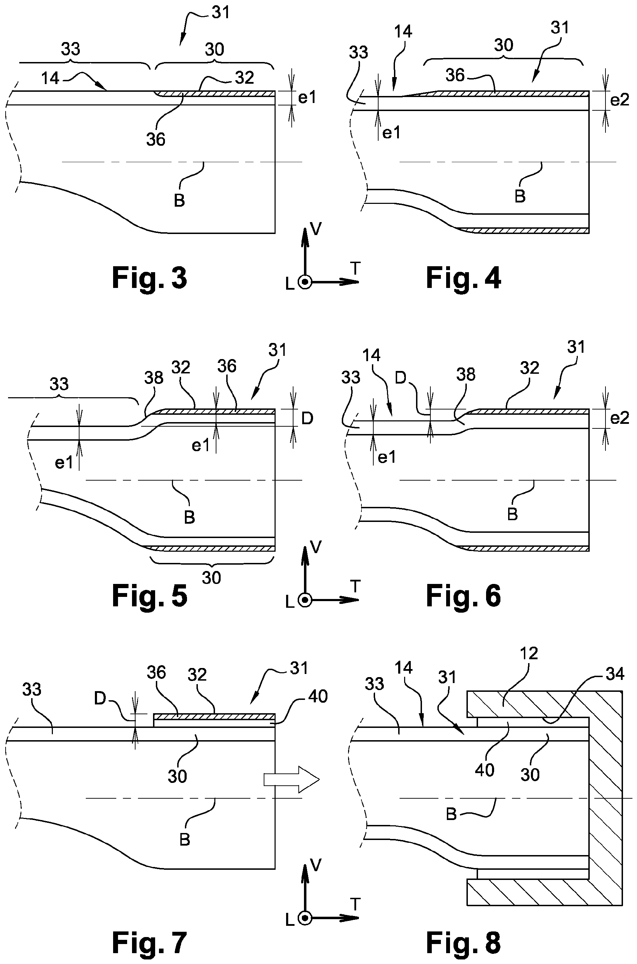

Pour permettre d'ajuster précisément les dimensions externes de la tête 31 aux dimensions du logement 34, il est prévu, préalablement à l'étape "E3" de fixation, une étape "E2" de rectification qui consiste à ôter une épaisseur de matière sur la face 32 externe cylindrique de la tête 31. La matière enlevée est représentée par la référence 36 aux figures 3 et suivantes.

Cette opération est par exemple réalisée en usinant la face cylindrique de la tête. Il s'agit par exemple d'enlever des copeaux de matière par bande transversale au moins sur la longueur encastrée de la tête.

Un tel procédé permet d'obtenir une fixation présentant une rigidité satisfaisante et une résistance sans alourdir l'essieu 10.

Néanmoins, on a constaté que l'opération d'ajustement était susceptible de diminuer la résistance de la traverse 14 dans certains cas. En effet, comme cela est visible à la figure 3, la matière 36 enlevée lors de l'étape "E2" de rectification a légèrement creusé la face 32 extérieure cylindrique de la tête 31 au-dessous du niveau de la face extérieure du tronçon 33 intermédiaire de la traverse 14, provoquant un changement de section abrupte. Malgré la faible épaisseur de matière enlevée, par exemple de l'ordre du millimètre, la diminution de section abrupte constitue un point d'accumulation de contraintes susceptible de réduire la résistance de la traverse 14. Pour certaines utilisations cette réduction de résistance est susceptible d'être problématique.

En outre, l'épaisseur "e1" de la paroi de la tête 31 est égale à celle de la paroi du tronçon intermédiaire 33. Ainsi après rectification, l'épaisseur de la paroi de la tête 31 devient inférieure à celle de la paroi du tronçon 33 intermédiaire. Ceci participe à réduire la résistance de la traverse 14.

Pour résoudre ce problème, comme cela est illustré à la figure 4, on a proposé un deuxième mode de réalisation de l'invention dans lequel le tronçon 30 d'extrémité de la traverse 14 formant la tête 31 présente une épaisseur "e2" supérieure à celle "e1" de la paroi du tronçon 33 intermédiaire. La différence d'épaisseur est par exemple au moins égale à l'épaisseur maximale de matière 36 susceptible d'être enlevée lors de l'opération de rectification.

Ainsi, ceci garantit d'obtenir une tête 31 présentant une paroi d'épaisseur au moins égale à celle du tronçon intermédiaire. La résistance de la traverse 14 est donc améliorée par rapport au premier mode de réalisation.

On a aussi proposé un deuxième mode de réalisation de l'invention qui est représenté à la figure 5. Ce deuxième mode de réalisation reprend l'étape "E2" de rectification et l'étape "E3" de fixation par frettage du premier mode de réalisation.

A la différence du premier mode de réalisation, lors d'une étape "E1" de formation initiale préalable à l'opération de rectification, le tronçon 30 d'extrémité de la traverse 14 est conformé de manière à obtenir une tête 31 saillante présentant une face 32 extérieure cylindrique faisant saillie radialement sur tout son pourtour par rapport à la face extérieure du tronçon 33 intermédiaire de la traverse 14. La distance "D" de saillie est au moins égale à l'épaisseur maximale susceptible d'être ôtée lors de l'étape "E2" de rectification.

La tête 31 est ainsi séparée du tronçon 33 intermédiaire par une zone 38 de transition présentant un changement de section s'élargissant depuis le tronçon 33 intermédiaire vers la tête 31.

Ainsi, lors de l'étape "E2" de rectification, la matière 36 est enlevée par bandes transversales sur toute la longueur de la tête 31 en débouchant axialement dans la zone de transition. Ceci évite que l'enlèvement de matériau ne s'arrête abruptement dans la paroi.

Lors de l'étape "E1" de formation, la tête est obtenue par une opération d'expansion radiale de la paroi formant la tête 31 d'extrémité de la traverse 14. Avant l'opération d'expansion, la tête 31 d'extrémité présente une section identique à celle du tronçon 33 intermédiaire. Cette opération est par exemple réalisée en insérant un mandrin à expansion dans l'extrémité ouverte de la traverse 14 sur une longueur axiale correspondant à celle de la tête 31, puis à exercer un effort d'expansion radial par l'intermédiaire du mandrin.

Dans ce cas, la zone 38 de transition présente une forme globalement tronconique divergente progressivement depuis l'extrémité du tronçon 33 intermédiaire jusqu'à la tête 31.

Selon une variante du deuxième mode de réalisation représentée à la figure 6, la tête d'extrémité présente une paroi d'épaisseur supérieure à celle de la paroi formant le tronçon intermédiaire. Ceci permet à la tête 31 de conserver une paroi d'épaisseur au moins égale à la paroi du tronçon 33 intermédiaire même lorsque de la matière est enlevée. Un tel essieu 10 présente ainsi une résistance encore plus élevée.

Selon un quatrième mode de réalisation de l'invention qui est représenté à la figure 7, le tronçon 30 d'extrémité de la traverse 14 présente une section identique à celle du tronçon 33 intermédiaire tout comme dans les premier et troisième modes de réalisation.

A la différence du troisième mode de réalisation, l'étape "E1" de de formation de la tête 31 consiste ici à fixer rigidement un manchon 40 autour du tronçon 30 d'extrémité de la traverse 14 pour former la tête 31. Le tronçon 30 d'extrémité de la traverse 14 est par exemple fretté dans le manchon 40.

En variante non représentée de l'invention, le manchon 40 est fixé par soudage à la traverse 14.

La face 32 cylindrique extérieure du manchon 40 forme directement la face cylindrique extérieure de la tête 31. Le manchon 40 présente une paroi d'épaisseur supérieure à l'épaisseur maximale susceptible d'être enlevée lors de l'opération de rectification.

Ainsi, après l'opération de fixation, le manchon 40 se retrouve intercalé radialement entre le tronçon d'extrémité de la traverse 14 et la paroi cylindrique intérieure du logement, comme cela est illustré à la figure 8.

Cette solution permet de préserver l'intégrité du matériau formant la traverse 14. La traverse 14 conserve donc de très bonnes caractéristiques de résistance.

L'invention permet ainsi d'obtenir un essieu 10 comportant une traverse 14 en acier fixée rigidement à des bras 12 en aluminium sans pour autant alourdir l'essieu 10 ni en diminuer la résistance.

## Revendications

1. Procédé de réalisation d'un essieu (10) pour véhicule automobile comportant :
- une traverse (14) tubulaire d'axe (B) transversal qui est souple élastiquement en torsion ;
- deux bras (12) parallèles longitudinaux dont chacun est destiné à être fixé à une caisse du véhicule automobile et dont chacun est fixé rigidement à un tronçon (30) d'extrémité transversale de la traverse (14);
- la traverse (14) comportant une tête (31) d'extrémité,
**caractérisé en ce que**, le procédé comporte une étape (E3) de fixation rigide d'au moins un bras (12) sur la traverse (14) par encastrement transversal à force de la tête (31) d'extrémité de la traverse (14) dans un logement (34) de forme complémentaire du bras (12) avec ajustement serré sensiblement sur toute la longueur de la tête (31).

2. Procédé selon la revendication précédente, **caractérisé en ce que**, préalablement à l'étape (E3) de fixation, le procédé comporte une étape (E2) de rectification qui consiste à ôter une épaisseur (36) de matière sur la face (32) externe cylindrique de la tête (31) pour ajuster précisément les dimensions externe de la tête (31) par rapport aux dimensions du logement (34).

3. Procédé selon la revendication précédente, **caractérisé en ce que**, préalablement à l'étape (E2) de rectification, le procédé comporte une étape (E1) de formation de la tête (31) cylindrique en bout d'un tronçon (33) cylindrique intermédiaire de la traverse (14) pour obtenir une tête (31) présentant une face (32) externe cylindrique faisant saillie radialement sur tout son pourtour par rapport à la face externe du tronçon (33) intermédiaire, la distance (D) de saillie étant au moins égale à l'épaisseur maximale susceptible d'être ôtée lors de l'étape (E2) de rectification.

4. Procédé selon la revendication précédente, **caractérisé en ce que**, lors de l'étape (E1) de formation, la tête (31) est obtenue par une opération d'expansion radiale de la paroi formant le tronçon (30) d'extrémité de la traverse (14).

5. Procédé selon l'une quelconque des revendications 3 à 4, **caractérisé en ce que** la tête (31) d'extrémité présente une paroi d'épaisseur (e2) supérieure à celle de la paroi formant le tronçon (33) intermédiaire.

6. Procédé selon la revendication 4, **caractérisé en ce que** lors de l'étape (E1) de de formation de la tête (31), un manchon (40) est fixé rigidement autour du tronçon (30) d'extrémité de la traverse (14) pour former la tête (31).

7. Procédé selon la revendication précédente, **caractérisé en ce que** le tronçon (30) d'extrémité de la traverse (14) est encastré transversalement à force dans le manchon (40) avec ajustement serré.

8. Procédé selon la revendication précédente, **caractérisé en ce que** le manchon (40) est fixé par soudage à la traverse (14).

9. Essieu (10) obtenu par la mise en oeuvre du procédé selon l'une quelconque des revendications précédentes, **caractérisé en ce que** chaque extrémité de la traverse (14) comporte une tête (31) qui est fixée rigidement par encastrement transversal à force dans un logement (34) complémentaire du bras (12) associé avec ajustement serré sensiblement sur toute la longueur de la tête (31).

10. Essieu (10) selon la revendication précédente, **caractérisé en ce que** la traverse (14) est réalisée en acier tandis que les bras (12) sont réalisés en aluminium.

11. Essieu (10) selon l'une quelconque des revendications 9 ou 10, **caractérisé en ce que** chaque tête (31) présente en section une forme oblongue.

12. Essieu (10) selon l'une quelconque des revendications 9 à 11, **caractérisé en ce que** le logement (34) du bras (12) n'est pas traversant.

## Patentansprüche

1. Verfahren zur Herstellung einer Achse (10) für ein Kraftfahrzeug, die aufweist:
- einen rohrförmigen Querträger (14) mit einer Querachse (B), der elastisch torsionsweich ist;
- zwei parallele Längsarme (12), von denen jeder dazu bestimmt ist, an einer Karosserie des Kraftfahrzeugs befestigt zu werden und von denen jeder starr an einem Querendeabschnitt (30) des Querträgers (14) befestigt ist;
- wobei der Querträger (14) einen Endkopf (31) aufweist,
**dadurch gekennzeichnet, dass** das Verfahren einen Schritt (E3) der starren Befestigung mindestens eines Arms (12) am Querträger (14) durch Querpresseinspannung des Endkopfes (31) des Querträgers (14) in eine Aufnahme (34) komplementärer Form des Arms (12) mit Klemmpassung im Wesentlichen über die ganze Länge des Kopfs (31) aufweist.

2. Verfahren nach dem vorhergehenden Anspruch, **dadurch gekennzeichnet, dass** das Verfahren vor dem Befestigungsschritt (E3) einen Korrekturschritt (E2) aufweist, der darin besteht, eine Materialdicke (36) an der zylindrischen Außenseite (32) des Kopfes (31) zu entfernen, um die Außenabmessungen des Kopfes (31) bezüglich der Abmessungen der Aufnahme (34) präzise zu justieren.

3. Verfahren nach dem vorhergehenden Anspruch, **dadurch gekennzeichnet, dass** das Verfahren vor dem Korrekturschritt (E2) einen Schritt (E1) der Bildung des zylindrischen Kopfes (31) am Ende eines zylindrischen Zwischenabschnitts (33) des Querträgers (14) aufweist, um einen Kopf (31) zu erhalten, der eine zylindrische Außenseite (32) aufweist, die radial über seinen ganzen Umfang bezüglich der Außenseite des Zwischenabschnitts (33) vorspringt, wobei der Vorsprungsabstand (D) mindestens gleich der maximalen Dicke ist, die im Korrekturschritt (E2) entfernt werden kann.

4. Verfahren nach dem vorhergehenden Anspruch, **dadurch gekennzeichnet, dass** im Bildungsschritt (E1) der Kopf (31) durch einen Vorgang der radialen Ausdehnung der Wand erhalten wird, die den Endabschnitt (30) des Querträgers (14) bildet.

5. Verfahren nach einem der Ansprüche 3 bis 4, **dadurch gekennzeichnet, dass** der Endkopf (31) eine Wand einer Dicke (e2) größer als diejenige der den Zwischenabschnitt (33) bildenden Wand aufweist.

6. Verfahren nach Anspruch 4, **dadurch gekennzeichnet, dass** im Bildungsschritt (E1) des Kopfes (31) eine Muffe (40) starr um den Endabschnitt (30) des Querträgers (14) befestigt wird, um den Kopf (31) zu bilden.

7. Verfahren nach dem vorhergehenden Anspruch, **dadurch gekennzeichnet, dass** der Endabschnitt (30) des Querträgers (14) mit Klemmpassung quer in die Muffe (40) presseingespannt wird.

8. Verfahren nach dem vorhergehenden Anspruch, **dadurch gekennzeichnet, dass** die Muffe (40) durch Schweißen am Querträger (14) befestigt wird.

9. Achse (10), die durch die Durchführung des Verfahrens nach einem der vorhergehenden Ansprüche erhalten wird, **dadurch gekennzeichnet, dass** jedes Ende des Querträgers (14) einen Kopf (31) aufweist, der starr durch Querpresseinspannung in eine komplementäre Aufnahme (34) des zugeordneten Arms (12) mit Klemmpassung im Wesentlichen über die ganze Länge des Kopfes (31) befestigt wird.

10. Achse (10) nach dem vorhergehenden Anspruch, **dadurch gekennzeichnet, dass** der Querträger (14) aus Stahl hergestellt ist, während die Arme (12) aus Aluminium hergestellt sind.

11. Achse (10) nach einem der Ansprüche 9 oder 10, **dadurch gekennzeichnet, dass** jeder Kopf (31) im Schnitt eine längliche Form aufweist.

12. Achse (10) nach einem der Ansprüche 9 bis 11, **dadurch gekennzeichnet, dass** die Aufnahme (34) des Arms (12) nicht durchgehend ist.

## Claims

1. Method for producing an axle (10) for a motor vehicle, comprising:
- a tubular crossmember (14) having a transverse axis (B) which is resiliently flexible under torsion;
- two longitudinal parallel arms (12), each thereof being intended to be attached to a body shell of the motor vehicle and each thereof being rigidly attached to a transverse end section (30) of the crossmember (14);
- the crossmember (14) comprising an end head (31), **characterized in that** the method comprises a step (E3) of rigidly attaching at least one arm (12) to the crossmember (14) by transversely embedding by force the end head (31) of the crossmember (14) into a recess (34) of complementary shape to the arm (12) with an interference fit substantially over the entire length of the head (31).

2. Method according to the preceding claim, **characterized in that**, prior to the attachment step (E3), the method comprises a surface-treatment step (E2) which consists in removing a thickness (36) of material from the external cylindrical face (32) of the head (31) in order to make accurate adjustments to the external dimensions of the head (31) relative to the dimensions of the recess (34).

3. Method according to the preceding claim, **characterized in that**, prior to the surface-treatment step (E2), the method comprises a step (E1) of shaping the cylindrical head (31) at the end of an intermediate cylindrical section (33) of the crossmember (14) in order to obtain a head (31) which has an external cylindrical face (32) protruding radially over its entire periphery relative to the external face of the intermediate section (33), the protruding distance (D) being at least equal to the maximum thickness which is able to be removed during the surface-treatment step (E2).

4. Method according to the preceding claim, **characterized in that**, during the shaping step (E1), the head (31) is obtained by a radial expansion operation of the wall, forming the end section (30) of the crossmember (14) .

5. Method according to either one of Claims 3 and 4, **characterized in that** the end head (31) has a wall having a thickness (e2) which is greater than that of the wall forming the intermediate section (33).

6. Method according to Claim 4, **characterized in that**, during the step (E1) of shaping the head (31), a sleeve (40) is rigidly attached about the end section (30) of the crossmember (14) in order to shape the head (31).

7. Method according to the preceding claim, **characterized in that** the end section (30) of the crossmember (14) is embedded transversely by force into the sleeve (40) with an interference fit.

8. Method according to the preceding claim, **characterized in that** the sleeve (40) is attached by welding to the crossmember (14).

9. Axle (10) obtained by implementing the method according to any one of the preceding claims, **characterized in that** each end of the crossmember (14) comprises a head (31) which is rigidly attached by being embedded transversely by force with an interference fit substantially over the entire length of the head (31) into a recess (34) which is complementary to the associated arm (12).

10. Axle (10) according to the preceding claim, **characterized in that** the crossmember (14) is produced from steel whilst the arms (12) are produced from aluminum.

11. Axle (10) according to either one of Claims 9 and 10, **characterized in that** each head (31) has an oblong shape in section.

12. Axle (10) according to any one of Claims 9 to 11, **characterized in that** the recess (34) of the arm (12) is not a through-passage.
